# EUROPÄISCHE PATENTSCHRIFT

(11) **EP 3 919 461 B1**
(45) Veröffentlichungstag und Bekanntmachung des Hinweises auf die Patenterteilung: **29.03.2023**
(21) Anmeldenummer: 21177229.8
(22) Anmeldetag: 01.06.2021
(51) Int. Cl.: C04B 35/565, C04B 35/63, C04B 35/632, C04B 35/66, C04B 38/00, F23H 17/12

(54) **TROCKENER VERSATZ UND VERSATZFRISCHMASSE ZUR HERSTELLUNG EINES GROBKERAMISCHEN, GEBRANNTEN FEUERFESTEN ERZEUGNISSES, INSBESONDERE EINER ROHRSCHUTZPLATTE, AUS NITRIDGEBUNDENEM SILICIUMCARBID, DERARTIGES ERZEUGNIS SOWIE VERFAHREN ZU SEINER HERSTELLUNG UND MÜLLVERBRENNUNGSANLAGE, RAUCHGASENTSCHWEFELUNGSANLAGE UND SCHMELZWANNE MIT EINEM DERARTIGEN ERZEUGNIS**
DRY OFFSET AND OFFSET FRESH MASS FOR THE PRODUCTION OF A COARSE-CERAMIC FIRED REFRACTORY PRODUCT, IN PARTICULAR OF A PIPE PROTECTION PLATE, FROM NITRIDE-BONDED SILICON CARBIDE, SUCH PRODUCT AND METHOD FOR ITS MANUFACTURE AND REFUSE INCINERATION PLANT, FLUE GAS DESULFURIZATION SYSTEM AND MELTING TANK WITH SUCH A PRODUCT
FORMULATION SÈCHE ET MASSE FRAICHE DE FORMULATION DESTINÉES À LA FABRICATION D'UN PRODUIT CÉRAMIQUE IGNIFUGE CALCINÉ, NOTAMMENT D'UNE PLAQUE DE PROTECTION DE TUYAU, À PARTIR DE CARBURE DE SILICIUM LIÉ AU NITRURE, PRODUIT, AINSI QUE SON PROCÉDÉ DE FABRICATION ET INSTALLATION D'INCINÉRATION DES DÉCHETS, INSTALLATION DE DÉSULFURATION DES GAZ DE COMBUSTION ET CUVE DE FUSION DOTÉE D'UN TEL PRODUIT

(30) Priorität: 03.06.2020 DE 102020206957
(43) Veröffentlichungstag der Anmeldung: 08.12.2021
(73) Patentinhaber: Refratechnik Holding GmbH, 80807 München (DE)
(72) Erfinder: HOMOLA, Felix, Dr., 49326 Melle (DE); SEKER, Süheyl, 32130 Enger (DE)
(74) Vertreter: Dr. Solf & Zapf Patent- und Rechtsanwalts PartG mbB

(56) Entgegenhaltungen:
- CN-A- 109 053 200
- CN-A- 110 981 510
- DE-T2- 69 518 750
- JP-A- 2005 075 671
- US-A1- 2006 281 625
- US-A1- 2012 142 518

## Beschreibung

Die vorliegende Erfindung betrifft einen trockenen Versatz und eine Versatzfrischmasse zur Herstellung eines grobkeramischen feuerfesten, geformten Erzeugnisses, insbesondere einer Rohrschutzplatte, aus Siliciumcarbidwerkstoff mit stickstoffhaltigem Bindesystem, ein derartiges Erzeugnis sowie ein Verfahren zu dessen Herstellung und eine Müllverbrennungsanlage mit einer derartigen Rohrschutzplatte.

Zudem betrifft die Erfindung eine Rauchgasentschwefelungsanlage und eine Schmelzwanne mit mindestens einem derartigen Erzeugnis und die Verwendung des Versatzes sowie der Versatzfrischmasse.

Der Begriff "feuerfest" soll im Rahmen der Erfindung nicht begrenzt sein auf die Definition gemäß ISO 836 bzw. DIN 51060, die einen Kegelfallpunkt von > 1500 °C definieren. Feuerfeste Erzeugnisse im Sinne der Erfindung haben einen Druckerweichungspunkt T_{0,5} gemäß DIN EN ISO 1893: 2008-09 von T_{0,5} ≥ 600 °C, bevorzugt T_{0,5} ≥ 800 °C. Demnach sind feuerfeste bzw. refraktäre körnige Werkstoffe bzw. Körnungen im Sinne der Erfindung solche Werkstoffe bzw. Körnungen, die für ein feuerfestes Erzeugnis mit dem oben genannten Druckerweichungspunkt T_{0,5} geeignet sind.

Die erfindungsgemäßen feuerfesten Erzeugnisse werden zum Schutz von Aggregatkonstruktionen in Aggregaten eingesetzt, in denen Temperaturen zwischen 600 und 2000 °C, insbesondere zwischen 1000 und 1800° C, vorherrschen.

Grobkeramische Erzeugnisse sind bekanntermaßen Erzeugnisse, die aus Körnungen mit Korngrößen bis 6 mm, in besonderen Fällen auch bis 25 mm hergestellt werden (siehe "Gerald Routschka/Hartmut Wuthnow, Praxishandbuch "Feuerfeste Werkstoffe", 5. Auflage, Vulkan-Verlag (im Folgenden lediglich mit "Praxishandbuch" bezeichnet), Kapitel 2).

Grobkeramik wird durch die Korngröße der Gefügebestandteile von der Feinkeramik unterschieden. Sind die Gefügebestandteile zumindest teilweise größer als 1 mm so liegt ein Grobkeramikprodukt vor, sind die Gefügebestandteile ausschließlich ≤ 1 mm, handelt es sich um Feinkeramik.

Dabei umfasst der Begriff "Körnung" bzw. "körniger Werkstoff" im Sinne der Erfindung einen schüttbaren Feststoff, der aus vielen kleinen, festen Körnern besteht. Weisen die Körner eine Korngröße ≤ 200 µm auf, handelt es sich bei der Körnung um ein Mehl bzw. Pulver. Die Begriffe "Mehl" und "Pulver" werden deshalb synonym verwendet.

Sind die Körner durch mechanisches Zerkleinern, z.B. Brechen und/oder Mahlen, hergestellt, handelt sich um ein Brechgranulat bzw. eine gebrochene Körnung. Eine Körnung kann aber auch Granulatkörner oder Pelletkörner aufweisen, die durch Granulieren bzw. Pelletieren ohne mechanische Zerkleinerung hergestellt werden. Die Kornverteilung der Körnung wird in der Regel durch Siebung eingestellt. Sofern nichts Weiteres angegeben ist, handelt es sich bei den im Rahmen dieser Erfindung aus mineralischen Rohstoffen bestehenden verwendeten Körnungen um Brechgranulat.

Soweit nichts Gegenteiliges angegeben ist, werden die im Rahmen dieser Erfindung angegebenen Korngrößen zudem gemäß DIN 66165-2:2016-08 bestimmt.

Im Rahmen der Erfindung weisen Kornfraktionen bzw. Kornklassen zudem jeweils Korngrößen zwischen den beiden angegebenen Prüfkorngrößen auf. Die Bezeichnung Kornfraktion bzw. Kornklasse meint somit, dass keine Körner auf dem oberen Sieb liegen bleiben und keine durch das untere durchfallen. Es liegt also kein Überkorn und kein Unterkorn vor.

Im Gegensatz dazu schließt die Bezeichnung "Korngruppe" ein, dass einige Körner auf dem oberen Sieb liegen bleiben (Überkorn) und einige durch das untere Sieb durchfallen (Unterkorn).

Zudem weisen auf dem Fachgebiet verwendete Kornfraktionen bzw. Korngruppen Körner unterschiedlicher Größe auf. Sie weisen also eine Kornverteilung bzw. Korngrößenverteilung auf. Es handelt sich nicht um Einkornfraktionen bzw. -gruppen.

Bei den grobkeramischen Erzeugnissen wird zudem zwischen geformten und ungeformten Erzeugnissen unterschieden.

Bei geformten grobkeramischen Erzeugnissen handelt es sich um ungebrannte, getemperte oder keramisch gebrannte, vorzugsweise in einer keramischen Fabrik hergestellte, Produkte, insbesondere Steine oder Platten. Es kann sich aber auch z.B. um andere, vorzugsweise gegossene, Formkörper, z.B. Düsen oder Glocken, handeln. Die geformten Erzeugnisse haben eine definierte Geometrie und sind einbaufertig. Die Formgebung erfolgt z.B. durch Pressen, Stampfen, Rammen oder Gießen, insbesondere Schlickergießen. Die geformten Steine, werden z.B. zur Ausbildung einer Zustellung, mit Mörtel oder mörtelfrei ("knirsch") vermauert. Der Produktionsprozess von grobkeramischen geformten Erzeugnissen gliedert sich üblicherweise in die folgenden Schritte (Praxishandbuch, Seite 15/Punkt 2.1):
- Aufbereitung
- Mischen
- Formgebung
- Trocknen
- (gegebenenfalls) thermische Behandlung bis 800 °C, Brennen oder Sintern
- Nachbehandlung (falls erforderlich)

Bei ungeformten Erzeugnissen handelt es sich um Erzeugnisse, die, meist beim Anwender, aus einer ungeformten Masse oder aus Batzen, z.B. durch Gießen, Vibrieren, Stochern, Stampfen oder Spritzen, in ihre endgültige Form gebracht werden. Ungeformte Erzeugnisse werden am Verwendungsort meist hinter Schalungen in größeren Feldern eingebracht und bilden nach der Erhärtung einen Teil der Zustellung. Beispielsweise handelt es sich bei den ungeformten Erzeugnissen um Spritzmassen, Stampfmassen, Gießmassen, Vibrationsmassen oder Vergussmassen.

Sowohl geformte als auch ungeformte Erzeugnisse werden in an sich bekannter Weise aus einem grobkeramischen Versatz hergestellt.

Des Weiteren unterscheidet man bei den feuerfesten Erzeugnissen bekanntermaßen zwischen nichtbasischen (Praxishandbuch, 4.1) und basischen Erzeugnissen (Praxishandbuch, 4.2). Gemäß DIN EN ISO 10081:2005-05 wird insbesondere basierend auf dem chemischen Reaktionsverhalten zwischen nicht basischen und basischen feuerfesten Erzeugnissen unterschieden. Die Erzeugnisgruppe der nicht basischen Erzeugnisse umfasst die Werkstoffe der SiO₂-Al₂O₃-Reihe und andere, nach ihrem chemischen Reaktionsverhalten nicht näher eingruppierbare Werkstoffe wie SiC- und Kohlenstoff-Produkte. Außerdem werden Chromit-, Picrochromit-, Spinell- und Forsteritsteine zu den basischen Erzeugnissen gerechnet, obwohl sie nahezu neutral sind.

Siliciumcarbidwerkstoffe bzw. SiC-Feuerfestwerkstoffe sind im Praxishandbuch, Kapitel 4.1.5 beschrieben. Zur Herstellung feuerfester Produkte aus Siliciumcarbid (SiC) eignen sich die in der keramischen Verfahrenstechnik üblichen Methoden. Allerdings wird bei fast allen SiC-Feuerfestwerkstoffen wegen der fehlenden Sinterfähigkeit grober Siliciumcarbidkörnungen mit artfremden Bindungen gearbeitet. Dabei wird unterschieden in oxidische oder silikatische Bindung, stickstoffhaltige Bindesysteme, arteigene SiC-Bindung und Sondertypen (siehe insbesondere auch Praxishandbuch, Tabelle 4.10 A).

Siliciumcarbidwerkstoffe mit stickstoffhaltigem Bindesystem (=nitridgebundenes SiC bzw. nitridgebundenes Siliciumcarbid) weisen SiC-Körner bzw. Siliciumcarbidkörner auf, die mittels einer nitridhaltigen Bindematrix miteinander verbunden sind. Die Bindematrix weist als Bindephasen Si₂ON₂ (Siliciumoxinitrid), Si₃N₄ (Siliciumnitrid) und/oder SiAION (Siliciumaluminiumoxinitrid) auf.

Bei der Herstellung von feuerfesten Formkörpern, insbesondere Platten oder Steinen, aus Siliciumcarbidwerkstoff mit stickstoffhaltigem Bindesystem bzw. nitridgebundenem SiC werden zunächst Formkörper, insbesondere Presslinge, aus einem Versatz hergestellt, der zumindest eine SiC-Körnung bzw. Siliciumcarbidkörnung, Si-Pulver bzw. Siliciumpulver und gegebenenfalls einen Al-Rohstoff enthält. Die Presslinge werden dann in weitgehend sauerstofffreier Stickstoffofenatmosphäre bei ca. 1450°C unter Bildung der jeweiligen oben genannten Nitridphase(n) gebrannt. Beim Brand reagiert nämlich das zugesetzte freie Silicium des Siliciumpulvers mit dem Stickstoff der Ofenatmosphäre unter Bildung der jeweiligen Nitridphase(n). Dies nennt man auch Reaktionssintern. Die Nitridphasen sind also Sinterphasen. Zur Ausbildung der Si₂ON₂-Phase und/oder der SiAION-Phase kann dem Versatz zudem feinteiliges bzw. mehlförmiges Siliziumdioxid (SiO₂) zugegeben werden, wobei das SiO₂ als Sauerstoffquelle für die Bildung von Si₂ON₂ und/oder SiAION aus dem Si-Pulver dient. Der Al-Rohstoff dient zur Bildung von SiAlON.

Die genannten Nitridphasen bewirken dabei in der Regel eine gute Festigkeit auch noch bei hohen Temperaturen, sowie eine gute Korrosionsbeständigkeit der aus Siliciumcarbidwerkstoff mit stickstoffhaltigem Bindesystem bzw. nitridgebundenem SiC bestehenden feuerfesten Produkte. Zudem weisen die Produkte eine hohe Wärmeleitfähigkeit, gute Temperaturwechselbeständigkeit und einen guten Abrasionswiderstand auf.

Aufgrunddessen werden derartige Produkte z.B. in Hausmüllverbrennungsanlagen eingesetzt. Die Entsorgung von Hausmüll wird aus umwelttechnischen Gründen zunehmend in Müllverbrennungsanlagen durchgeführt. Diese werden aufgrund der guten Schlackenabweisung und chemischen Beständigkeit größtenteils mit Produkten aus nitridgebundenem SiC ausgerüstet. Beispielsweise handelt es sich um Steine für die Feuerraumseitenwände, Verkleidungen für Erhitzerrohre zur Wärmerückgewinnung, Verschleißteile im Rostbereich sowie Thermoelementschutzrohre oder Stampfmassen zur Verfugung und Gestaltung von Übergängen. Die Verkleidung der Erhitzerrohre besteht dabei aus mehreren Rohrschutzplatten aus nitridgebundenem SiC.

Nachteilig bei Produkten aus nitridgebundenem SiC kann allerdings deren Angreifbarkeit durch Sauerstoff und Wasserdampf insbesondere im Temperaturbereich von 1000-1200°C sein. Denn das Oxidationsprodukt SiO₂ bildet in der Regel erst oberhalb dieser Temperaturen eine Selbstglasur auf den SiC-Körnern, die den Oxidationsfortschritt deutlich verlangsamt.

Insbesondere in Müllverbrennungsanlagen herrscht eine derartige sauerstoffhaltige Wasserdampfatmosphäre.

Aufgrunddessen ist es unter anderem aus der WO 2006/056698 A1 und der WO 2009/098657 A1 bekannt, zur Verbesserung der Oxidationsbeständigkeit eine Borkomponente zuzusetzen. Die Zugabe von Bor ist aber insbesondere aus umwelttechnischen und toxikologischen Aspekten nicht unbedenklich.

Die EP 3 191 429 A1 offenbart zudem einen trockenen Versatz zur Herstellung eines SiC-Granulat basierten, in Stickstoffatmosphäre keramisch gebrannten, feuerfesten Erzeugnisses, dessen Granulatkörner über eine mindestens ein Siliziumnitrid und mindestens eine Borverbindung und zudem SiAION enthaltende Sinterphase miteinander versintert sind. Der Versatz weist zumindest 60 bis 89,4 M.-%, insbesondere 78 bis 81 M.-%, SiC-Granulat, 10 bis 25 M.-%, insbesondere 14 bis 16 M.-%, Si-Pulver, 0,1 bis 2 M.-%, insbesondere 0,3 bis 0,4 M.- %, Borkomponente (errechnet als Bor aus der mindestens einen Borverbindung oder den Borverbindungen), 0,5 bis 13 M.-%, insbesondere 4,7 bis 5,6 M.-%, SiAION bildende Al-Komponente (errechnet als Al₂O₃ aus einem Al und/oder Al₂O₃- und/oder Al₂O₃/SiO₂-Produkt) auf. Das aus dem Versatz hergestellte Erzeugnis weist in situ eine gute Volumenbeständigkeit bei Sauerstoff- und Wasserdampfangriff auf.

DE69518750 zeigt einen trockenen Versatz mit 50 Gew.-% 220 Grit SiC, 16 Gew.-% Halloysitton, 2 Gew.-% Bentonit, 24 Gew.-% Si-Staub mit mittlerer Größe 3,5 Mikron und 8 Gew.-% 325 Mesh SiO₂ Pulver. Zu diesem trockenen Versatz wurde Pressseife zugefügt. Danach wurde die Mischung stranggepresst. Die resultierenden Stäbe wurden in einer Stickstoffatmosphäre bei 1450°C gesintert.

US2012/142518 zeigt eine trockene Pulvermischung aus Aluminiumoxid, 22,5 Gew.-% SiC, 6 Gew.-% SiO₂, 0,75 Gew.-% Si und 0,2 Gew.-% MgO. Zu dieser Trockenmischung wird 8 Gew.-% kolloidale Kieselsäurelösung zugefügt.

JP2005075671 zeigt einen Versatz enthaltend 43 Gew.-% SiC mit einer Korngrösse 1-8 mm, 46 Gew.-% SiC mit einer Korngrösse < 1 mm, 3 Gew.-% Al₂O₃, 1 Gew.-% MgO, 0,7 Gew.-% Russ, 0,5 Gew.-% Pech, 1 Gew.-% SiO₂, 0,3 Gew.-% Si, 1 Gew.-% Antioxidant, 3 Gew.-% Aluminazement, 0,3 Gew.-% Dispergiermittel und 0,1 Gew.-% Aushärtungsmittel.

US2006/281625 zeigt ein feuerfestes, geformtes, gebranntes Erzeugnis aus nitridgebundenem SiC, wobei das Erzeugnis 60-90 Gew.-% Siliciumcarbidkörner aufweist, die in 10-40 Gew.-% einer Bindematrix eingebunden sind, die als Bindephase zumindest Si₃N₄ und Si₂ON₂ aufweist. Bei der Aufbereitung kann 0,1-3 Gew.-% MgO zugefügt werden.

CN1 10981510 zeigt ein grobkeramisches, feuerfestes, geformtes, gebranntes Erzeugnis aus nitridgebundenem SiC, wobei das Erzeugnis 73 Gew.-% Siliciumcarbidkörner aufweist, die in einer Bindematrix eingebunden sind, die als Bindephase 14 Gew.-% Si₃N₄ und 14 Gew.-% Si₂ON₂ aufweist. Die Si₂ON₂-Phase verbessert die Oxidationsbeständigkeit. Der Gehalt an Si₃N₄ ist entweder gleich oder höher im Vergleich mit dem Gehalt an Si₂ON₂.

Aufgabe der vorliegenden Erfindung ist die Bereitstellung eines trockenen Versatzes und einer Versatzfrischmasse zur Herstellung eines grobkeramischen feuerfesten, geformten Erzeugnisses aus nitridgebundenem SiC, welches eine gute Oxidationsbeständigkeit bei Angriff durch Sauerstoff und Wasserdampf aufweist und gleichzeitig umwelttechnisch unbedenklich ist sowie die Verwendung des Versatzes und der Versatzfrischmasse.

Weitere Aufgaben sind die Bereitstellung eines derartigen Erzeugnisses, insbesondere einer Rohrschutzplatte für Müllverbrennungsanlagen, vorzugsweise für Hausmüllverbrennungsanlagen, oder einer Düse für Rauchgasentschwefelungsanlage oder einer Glocke für Schmelzwannen, sowie eines Verfahrens zu dessen Herstellung.

Außerdem sollen eine Müllverbrennungsanlage, vorzugsweise eine Hausmüllverbrennungsanlage mit einer Verkleidung mit mindestens einer derartigen Rohrschutzplatte, eine Rauchgasentschwefelungsanlage mit mindestens einer derartigen Düse und eine Schmelzwanne mit mindestens einer derartigen Glocke zur Abdeckung von Grafitelektroden bereit gestellt werden.

Diese Aufgaben werden durch einen Versatz mit den Merkmalen von Anspruch 1, eine Versatzfrischmasse mit den Merkmalen von Anspruch 6, eine Verwendung mit den Merkmalen von Anspruch 9, ein feuerfestes geformtes, gebranntes Erzeugnis mit den Merkmalen von Anspruch 10, ein Verfahren mit den Merkmalen von Anspruch 15, eine Müllverbrennungsanlage mit den Merkmalen von Anspruch 17, eine Rauchgasentschwefelungsanlage mit den Merkmalen von Anspruch 18 und eine Schmelzwanne mit den Merkmalen von Anspruch 19 gelöst. Vorteilhafte Weiterbildungen der Erfindung sind in den sich anschließenden Unteransprüchen gekennzeichnet.

Im Rahmen der Erfindung wurde überraschenderweise herausgefunden, dass es möglich ist, ein feuerfestes, geformtes, gebranntes borfreies Erzeugnis aus nitridgebundenem SiC mit guter Oxidationsbeständigkeit bereitzustellen, wenn die Bindematrix des Erzeugnisses einen ausreichenden Gehalt an der Bindephase Si₂ON₂ (Siliciumoxinitrid) enthält und wenn das Erzeugnis gleichzeitig einen bestimmten Gehalt an Mg (Magnesium) aufweist.

Erfindungsgemäß weist das Erzeugnis einen Si₂ON₂-Gehalt von 8,0 bis 18,0 M.-%, bevorzugt 10,0 bis 16 M.-%, bestimmt mittels RBA (Röntgenbeugungsanalyse) gemäß DIN EN 12698-2:2007-06, auf.

Außerdem weist das Erzeugnis erfindungsgemäß einen MgO-Gehalt von 0,005 bis 0,1 M.-%, bevorzugt 0,01 bis 0,08 M.-%, besonders bevorzugt 0,02 bis 0,07 M.-%, bestimmt mittels RFA (Röntgenfluoreszenzanalyse) gemäß DIN EN ISO 12677:2013-02 mit Schmelzaufschlussverfahren, auf.

Zudem ist das Erzeugnis erfindungsgemäß borfrei. Es weist somit einen Boroxidgehalt auf, der unterhalb der Nachweisgrenze liegt, also von < 0,0003 M.-%, bestimmt mittels ICP-AES (Atomemissionsspektrometrie mit induktiv gekoppeltem Plasma) gemäß DIN EN ISO 21078-1:2008-04.

Wie bereits erläutert, weist das erfindungsgemäße Erzeugnis überraschenderweise eine gute Oxidationsbeständigkeit auf, obwohl es borfrei ist. Vorzugsweise weist das erfindungsgemäße Erzeugnis einen Oxidationswert gemäß ASTM C-863-00(2016) bei einer Beaufschlagung mit 1000°C für 500 h in Wasserdampfatmosphäre von 0,0 bis 1,4 Vol.-%, bevorzugt 0,0 bis 1,0 Vol.-%, auf.

Die gute Oxidationsbeständigkeit beruht wohl darauf, dass durch den Einsatz einer Mg Komponente der eingebrachte SiO₂ Anteil beim Herstellungsverfahren im gewünschten Bereich beibehalten wird. Das bedeutet, dass im hergestellten Erzeugnis bei der chemischen Analyse SiO₂ nachweisbar ist. Das im hergestellten Produkt vorhandene SiO₂ wirkt dann offenbar wie ein Flussmittel und bildet eine Schutzschicht, die für die Oxidationsbeständigkeit notwendig ist.

Vorzugsweise weist das erfindungsgemäße Erzeugnis einen SiO₂-Gehalt von 0,5 bis 3,0 M.-%, bevorzugt 0,8 bis 2,0 M.-%, bestimmt mittels Röntgenfluoreszenzanalyse gemäß DIN EN ISO 12677:2013-02 mit Schmelzaufschlussverfahren, auf.

Zugleich wird ein stabiler Anteil von Si₂ON₂ gebildet, der ebenfalls die Oxidationsbeständigkeit verbessert.

Die Herstellung des erfindungsgemäßen Erzeugnisses erfolgt auf an sich bekannte Weise durch Herstellung von Formkörpern aus einem borfreien Versatz, der eine SiC-Körnung, Si-Pulver, SiO₂-Pulver und gegebenenfalls einen mehlförmigen Al-Träger Rohstoff bzw. eine Al-Komponente und erfindungsgemäß zumindest eine zusätzliche Mg-Komponente enthält.

Der trockene Versatz weist demnach folgende Versatzbestandteile bzw. Versatzkomponenten auf:
a) SiC-Körnung, vorzugsweise in einer Menge von ≥ 73,0 M.-%, bevorzugt von ≥ 76 M.-%, wobei die SiC-Körnung vorzugsweise einen Feinkornanteil mit einer Korngröße ≤ 1 mm und einen Grobkornanteil mit einer Korngröße > 1 mm aufweist, wobei der Grobkornanteil vorzugsweise 25 bis 33 M.-%, bevorzugt 27 bis 31 M.-%, bezogen auf die SiC-Körnung, beträgt,
b) Si-Pulver, vorzugsweise aus metallurgischem Silicium, in einer Menge von 10,0 bis 15,0 M.-%, bevorzugt von 12 bis 14,5 M.-%,
c) SiO₂-Pulver, vorzugsweise Quarzmehl, in einer Menge von 0,5 bis 5,0 M.-%, bevorzugt von 0,8 bis 2,5 M.-%,
d) zumindest eine mehlförmige Mg-Komponente aus zumindest einem Mg-haltigen Rohstoff
e) gegebenenfalls eine mehlförmige Al-Komponente aus zumindest einem Al-haltigen Rohstoff.

Infolgedessen weist der Versatz additiv bzw. zusätzlich zu den zu den Versatzkomponenten a) bis c) zumindest eine trockene Mg-Komponente, vorzugsweise zumindest ein Mg-haltiges Bindemittel, auf. Der Anteil an Mg-haltigem Bindemittel beträgt dabei vorzugsweise 0,05 - 3,0 M.-%.

Vorzugsweise weist der Versatz als Mg-Komponente Mg-Ligninsulfonat (Magnesium-Ligninsulfonat) und/oder Mg-Stearat (Magnesiumstearat) auf. Vorzugsweise weist der Versatz Mg-Ligninsulfonat in einer Menge von 1,5 bis 2,5 M.-%, bevorzugt 1,6 bis 1,8 M.-%, und/oder Mg-Stearat in einer Menge von 0,1 bis 0,5 M.-%, bevorzugt 0,2 bis 0,3 M.-%, auf.

Ligninsulfonate sind bekanntermaßen organische temporäre Bindemittel für feuerfeste Erzeugnisse. Es handelt sich um Salze der Ligninsulfonsäure, einem wasserlöslichen, anionischen Biopolymer. Es existieren bekanntermaßen beispielsweise Ca-, Na- oder Mg-basierte Ligninsulfonate.

Magnesiumstearat ist das Magnesiumsalz der Stearinsäure.

Es kann sich aber bei der Mg-Komponente auch um Magnesiumpulver oder Magnesiapulver oder Ton handeln.

Die Versatzkomponenten sind dabei derart zusammengestellt, dass der trockene Versatz erfindungsgemäß einem MgO-Gehalt von 0,1 bis 1,0 M.-%, bevorzugt von 0,15 bis 0,8 M.-%, besonders bevorzugt von 0,2 bis 0,4 M.-%, aufweist.

Der MgO-Gehalt des gesamten Versatzes setzt sich dabei aus dem MgO-Gehalt der einzelnen Versatzkomponenten zusammen. Der MgO-Gehalt der trockenen Versatzkomponenten wird dabei außer bei der SiC-Körnung und dem Si-Pulver bestimmt gemäß mittels RFA (Röntgenfluoreszenzanalyse) gemäß DIN EN ISO 12677:2013-02 mit Schmelzaufschlussverfahren. Bei der SiC-Körnung wird der MgO-Gehalt gemäß DIN EN ISO 21068-1:2008-12 und DIN EN ISO 21068-2:2008-12 mittels RFA (Röntgenfluoreszenzanalyse) bestimmt und bei dem Si-Pulver wird der MgO-Gehalt gemäß DIN 51001 :2003 mittels RFA (Röntgenfluoreszenzanalyse) bestimmt.

Der Versatz ist erfindungsgemäß außerdem borfrei. Das bedeutet, dass der Borgehalt bei allen Versatzkomponenten des Versatzes unterhalb der Nachweisgrenze liegt.

Der Versatz weist also keine Borkomponente auf. Als Borkomponente ist im Rahmen der Erfindung ein Rohstoff zu verstehen, der aus elementarem Bor oder mindestens einer Borverbindung besteht. Das heißt, die chemische Summenformel des Rohstoffes enthält mindestens eine Borverbindung. Beispielsweise handelt es sich bei einer Borkomponente um B₄C (Borcarbid) oder BN (Bornitrid).

Rohstoffe, die lediglich elementares Bor oder eine Borverbindung in geringfügigen Mengen bzw. Spuren als Verunreinigungen enthalten, sind keine Borkomponenten.

Der Versatz weist zudem vorzugsweise einen CaO-Gehalt von ≤ 0,05 M.-%, vorzugsweise ≤ 0,04 M.-%, bevorzugt ≤ 0,03 M.-%, auf. Es wird vermutet, dass die Begrenzung des CaO-Gehalts in Verbindung mit der Erhöhung des MgO-Gehalts den SiO₂-Anteil im hergestellten Erzeugnis im gewünschten Bereich, insbesondere im bevorzugten Bereich von 0,8 bis 2,0 M.-%, beibehält. Das Vorhandensein von > 0,05 M.-%, CaO im Versatz führt zu einer Senkung des SiO₂-Gehalts im hergestellten Erzeugnis und somit zu einer instabilen Oxidationsbeständigkeit.

Bei der aus Siliciumcarbid als Rohstoff bestehenden SiC-Körnung handelt es sich in an sich bekannter Weise um die Hauptkomponente des Versatzes. Sie ist vorzugsweise in Mengen von 73,0 bis 82,0 M.-%, bevorzugt 76,0 bis 80,0 M.- %, in dem Versatz enthalten.

Des Weiteren weist die SiC-Körnung des Versatzes eine Korngrößenverteilung auf, die für die Herstellung eines geformten grobkeramischen Erzeugnisses aus nitridgebundenem SiC üblich ist. Die SiC-Körnung weist somit eine Korngrößenverteilung auf, so dass die SiC-Körner im hergestellten Erzeugnis in an sich bekannter Weise eine Stützgefügekörner bilden, welche in die Bindematrix eingebettet sind.

Das heißt, die SiC-Körnung weist, wie bereits oben angegeben, vorzugsweise sowohl einen Feinkornanteil als auch einen Grobkornanteil auf. Dabei weisen sowohl der Feinkornanteil als auch der Grobkornanteil vorzugsweise eine stetige Korngrößenverteilung auf.

Mit Feinkornanteil werden dabei im Rahmen der Erfindung alle Körnungen ≤ 1 mm bezeichnet. Der Grobkornanteil weist entsprechend Korngrößen > 1 mm auf. Der Grobkornanteil macht dabei vorzugsweise 25 bis 33 M.-%, bevorzugt 27 bis 31 M.-%, der Gesamtmasse der SiC-Körnung aus.

Vorzugsweise weist die SiC-Körnung zudem eine maximale Korngröße ≤ 3,5 mm, bevorzugt ≤ 3,0 mm, auf.

Die für die SiC-Körnung im Versatz angegebenen Eigenschaften geltend selbstverständlich auch für die SiC-Körnung bzw. die Siliciumcarbidkörner im hergestellten Erzeugnis. Somit weist auch das hergestellte Erzeugnis vorzugsweise Siliciumcarbidkörner mit einer Korngröße ≤ 1 mm und Siliciumcarbidkörner mit einer Korngröße > 1 mm auf, wobei vorzugsweise der Anteil an Siliciumcarbidkörnern mit einer Korngröße > 1 mm 25 bis 33 M.-%, bevorzugt 27 bis 31 M.- %, bezogen auf die Gesamtmasse an Siliciumcarbidkörnern beträgt.

Vorzugsweise weist die SiC-Körnung zudem eine bimodale Korngrößenverteilung auf. Dies erhöht die Packungsdichte des Versatzes und die Dichte des hergestellten Produktes.

Die SiC-Körnung kann zudem aus einem einzigen oder mehreren Rohstoffen aus Siliciumcarbid (=Siliciumcarbid-Rohstoff(en)) bestehen. Beispielsweise unterscheiden sich die Siliciumcarbid-Rohstoffe hinsichtlich ihres SiC-Gehalts. Die SiC-Körnung ist zudem vorzugsweise in Mengen von 73,0 bis 82,0 M.-%, bevorzugt 76,0 bis 80,0 M.-%, in dem Versatz enthalten.

Die Kornform der groben Körner (> 0,5 mm) der SiC-Körnung ist zudem vorzugsweise kubisch. Derartige Produkte sind auf dem Markt erhältlich. Sie sind in der Regel durch Mahlen gebrochen.

Des Weiteren ist der der SiC Gehalt der SiC-Körnung vorzugsweise > 98 M.-%.

Bei der SiC-Körnung werden der SiC-Gehalt und der Gehalt der Begleitoxide/Begleitelemente gemäß DIN EN ISO 21068-1:2008-12 und DIN EN ISO 21068-2:2008-12 mittels RFA (Röntgenfluoreszenzanalyse) bestimmt und bei dem Si-Pulver wird der Si-Gehalt und der Gehalt der Begleitoxide/Begleitelemente gemäß DIN 51001:2003 mittels RFA (Röntgenfluoreszenzanalyse) bestimmt. Sofern nicht anderweitig angegeben, werden bei allen anderen Rohstoffen der Gehalt der Hauptkomponenten, wie z.B. der Al₂O₃-Gehalt und der SiO₂-Gehalt etc. und der Gehalt der Begleitoxide/Begleitelemente mittels Röntgenfluoreszenzanalyse gemäß DIN EN ISO 12667:2013-2 bestimmt.

Das aus Silicium als Rohstoff bestehende Si-Pulver des erfindungsgemäßen Versatzes besteht vorzugsweise aus metallurgischem Silicium (Siₘₑₜ bzw. Si_{mg}). Bei metallurgischem Silicium handelt es sich bekanntermaßen um Rohsilicium mit einer Reinheit von 98-99 M.-%.

Das Si-Pulver kann zudem aus einem einzigen oder mehreren Rohstoffen aus Silicium (=Silicium-Rohstoff(en)) bestehen. Beispielsweise unterscheiden sich die Silicium-Rohstoffe hinsichtlich ihres Si-Gehalts.

Zudem weist das Si-Pulver vorzugsweise eine stetige Kornverteilung auf.

Die maximale Korngröße des Si-Pulvers ist zudem vorzugsweise ≤ 75 µm.

Das Si-Pulver ist zudem erfindungsgemäß in Mengen von 10,0 bis 15,0 M.-%, bevorzugt 13,5 bis 14,5 M.-% in dem Versatz enthalten.

Der Eisengehalt (Fe) des Si-Pulvers, bestimmt gemäß DIN 51001 :2003, ist zudem vorzugsweise < 0,8 M.-% bevorzugt < 0,6 M.-%.

Des Weiteren liegt der Si Gehalt des Si-Pulvers, bestimmt gemäß DIN 51001 :2003, vorzugsweise zwischen 97,5 und 99,5 M.-%.

Das aus Siliciumdioxid als Rohstoff bestehende SiO₂-Pulver des erfindungsgemäßen Versatzes besteht vorzugsweise aus Quarz (kristallines Siliciumdioxid). Es handelt sich somit vorzugsweise um Quarzmehl. Es kann sich aber auch um amorphes Siliciumdioxid handeln, vorzugsweise um Mikrosilika oder pyrogene Kieselsäure oder gefällte Kieselsäure.

Das SiO₂-Pulver kann selbstverständlich ebenfalls aus einem einzigen Rohstoff aus Siliciumdioxid (=Siliciumdioxid-Rohstoff) bestehen oder auch eine Mischung aus mehreren Siliciumdioxid-Rohstoffen enthalten.

Zudem weist das SiO₂-Pulver vorzugsweise eine stetige Kornverteilung auf.

Das SiO₂-Pulver ist zudem erfindungsgemäß in Mengen von 0,5 bis 5,0 M.-%, bevorzugt 0,8 bis 2,5 M.-% in dem Versatz enthalten.

Der SiO₂ Gehalt des SiO₂-Pulvers beträgt zudem vorzugsweise > 98 M.-%.

Wie bereits erläutert, kann der Versatz auch zusätzlich bzw. additiv zu den Versatzkomponenten a) bis c) eine Al-Komponente bzw. Al-haltige Komponente aufweisen. Der gesamte Al-Gehalt des Versatzes ergibt sich dann aus der Summe des Al-Gehalts aller Versatzbestandteile. Insbesondere Siliciumcarbid-Rohstoffe und das SiO₂-Pulver enthalten in der Regel Al bzw. Al₂O₃ als Verunreinigung.

Bei der Al-Komponente handelt es sich vorzugsweise um Ton, bevorzugt um einen SiO₂ reichen Ton, bevorzugt Kaolin. Infolgedessen bringt auch der Ton zusätzlich zu dem SiO₂-Pulver SiO₂ mit in den Versatz ein. Zudem kann der Ton auch einen geringen Anteil an Mg enthalten und ist somit zugleich eine Mg-Komponente. Der Ton dient zudem insbesondere auch als Plastifizierungsmittel bei der Formgebung.

Es kann sich bei der Al-Komponente aber insbesondere auch um Aluminiumpulver oder Aluminapulver (Al₂O₃-Pulver), insbesondere Tonerdepulver, handeln.

Des Weiteren kann der Versatz, additiv zu den Komponenten a) bis e), auch noch zumindest ein festes, pulverförmiges Zusatzmittel enthalten.

Als festes Zusatzmittel kann z.B. Stärke enthalten sein. Stärke führt zu einer guten Grünfestigkeit und Trockenbruchfestigkeit. Der Gesamtanteil (Wirkstoffgehalt) an Zusatzmittel im trockenen Versatz beträgt zudem vorzugsweise < 0,8 M.-%, bevorzugt < 1,0 M.-%.

Zudem können auch, zusätzlich zu den Versatzkomponenten a) bis e) weitere Bestandteile enthalten sein. Es versteht sich dabei von selber, dass der Anteil an den Versatzkomponenten a) bis e) im Versatz so hoch ist, dass ein Erzeugnis aus nitridgebundenem SiC daraus herstellbar ist. Vorzugsweise besteht der erfindungsgemäße Versatz zu mindestens 90 Gew.-%, bevorzugt zu mindestens 95 Gew.-%, besonders bevorzugt zu mindestens 98 Gew.-%, aus den Versatzkomponenten a) bis d).

Vorzugsweise dient der trockene Versatz, wie bereits erläutert, zur Herstellung des erfindungsgemäßen geformten Erzeugnisses.

Dazu wird in an sich bekannter Weise wird eine Mischung bzw. Versatzfrischmasse aus den trockenen Versatzbestandteilen mit Wasser und/oder dem/den anderen flüssigen Versatzbestandteil(en) hergestellt. Wenn der Versatz ausreichend flüssige Versatzbestandteile enthält, ist die Zugabe von Wasser nicht notwendig, aber möglich.

Bei den flüssigen Versatzbestandteilen kann es sich zum Beispiel um ein flüssiges Bindemittel oder ein flüssiges Zusatzmittel handeln.

Beispielsweise kann es sich um flüssiges Mg-Ligninsulfonat, also eine flüssige Mg-Komponente, handeln, die zusätzlich oder alternativ zu der trockenen Mg-Komponente verwendet wird. Die Bestandteile der Versatzfrischmasse sind erfindungsgemäß allerdings ebenfalls so zusammengestellt, dass der Mg-Gehalt der Versatzfrischmasse, bezogen allerdings auf die Trockenmasse der Versatzfrischmasse, dem für den für den trockenen Versatz angegebenen Mg-Gehalt entspricht.

Gleiches gilt für den Gehalt an den anderen Versatzbestandteilen. Auch deren Mengen entsprechen den für den trockenen Versatz angegebenen Mengen, bezogen auf die Trockenmasse der Versatzfrischmasse. Handelt es sich zudem um ein flüssiges Bindemittel oder Zusatzmittel in Form einer Lösung oder dergleichen ist selbstverständlich der (trockene) Wirkstoffgehalt des Bindemittels oder Zusatzmittels maßgeblich. Die Trockenmasse der Versatzfrischmasse ergibt sich also aus der Summe der trockenen Versatzbestandteile und gegebenenfalls dem Wirkstoffgehalt der flüssigen Versatzbestandteile.

Bei dem flüssigen Zusatzmittel handelt es sich z.B. um ein Press- und/oder Gleithilfsmittel, z.B um ein Öl. Öl ist bekanntermaßen ein Presshilfsmittel zur Minimierung des Formenverschleißes.

Die Versatzfrischmasse weist vorzugsweise einen Feuchtegehalt von 2,5 bis 4,0 M.-% auf. Handelt es sich bei der Versatzfrischmasse um eine Gießmasse, weist diese vorzugsweise eine Feuchte von 6,5 - 8,0 M.-% auf.

Zur optimalen Verteilung des oder der flüssigen Bindemittel und/oder des Wassers und gegebenenfalls des zumindest einen flüssigen Zusatzmittels wird z.B. 8 bis 15 Minuten lang gemischt.

Die Versatzfrischmasse wird danach in Formen gegeben und verdichtet, so dass Formkörper gebildet werden. Die Versatzfrischmasse wird vorzugsweise derart verdichtet, dass die grünen Formkörper eine Rohdichte von 2,58 bis 2,64 g/cm³ gemäß DIN EN 993-1:2019-03 aufweisen.

Das Verdichten erfolgt vorzugsweise durch Rütteln und/oder Pressen. Die Pressdrücke liegen dabei in üblichen Bereichen, z.B. bei 3,0 bis 5,0 MPa, bevorzugt bei 3,5 bis 4,5 MPa.

Vorzugsweise wird nach dem Verdichten eine Trocknung durchgeführt, z.B. zwischen 80 und 120 °C, insbesondere zwischen 80 und 100 °C. Die Trocknung erfolgt vorzugsweise bis auf eine Restfeuchte zwischen 0,1 und 0,5 M.-%, insbesondere zwischen 0,2 und 0,3 M.-%, bestimmt gemäß DIN 51078:2002-12.

Die grünen, verdichteten Formkörper werden dann in an sich bekannter Weise in weitgehend sauerstofffreier Stickstoffofenatmosphäre in an sich bekannter Weise unter Bildung der Bindematrix mit den jeweiligen oben genannten Nitridphasen gebrannt. Zumindest bildet sich Si₃N₄ und Si₂ON₂. Auch bildet sich gegebenenfalls SiAlON. Die Nitridierphase beginnt bekanntermaßen bei ca. 600 °C. Zudem erfolgt eine Haltephase bei einer maximalen Temperatur von 1400 bis 1500 °C für vorzugsweise 17 bis 22 h.

Erfindungsgemäß weist das Erzeugnis einen Si₃N₄-Gehalt von 6,5 bis 12 M.-%, bevorzugt 7,0 bis 10 M.-%, bestimmt mittels Röntgenbeugungsanalyse gemäß DIN EN 12698-2:2007-06 auf.

Erfindungsgemäß ist der Si₃N₄-Gehalt des erfindungsgemäßen Erzeugnisses zudem kleiner als der Si₂ON₂-Gehalt.

Zudem weist das Erzeugnis vorzugsweise einen SiC-Gehalt von 69,0 bis 82,0 M.-%, bevorzugt 72,0 bis 78,0 M.-%, bestimmt gemäß DIN EN ISO 21068-1:2008-12 und DIN EN ISO 21068-2:2008-12, auf.

Außerdem weist das Erzeugnis vorzugsweise einen CaO-Gehalt von ≤ 0,05 M.- %, vorzugsweise ≤ 0,04 M.-%, bevorzugt ≤ 0,03 M.-%, bestimmt mittels Röntgenfluoreszenzanalyse gemäß DIN EN ISO 12677:2013-02 mit Schmelzaufschlussverfahren, auf. Insbesondere der geringe CaO-gehalt sorgt in Kombination mit dem erfindungsgemäßen MgO-Gehalt für eine gute Oxidationsbeständigkeit.

Wie bereits erläutert, weist das erfindungsgemäße Erzeugnis eine hervorragende Oxidationsbeständigkeit auf.

Zudem weist es aber auch gute mechanische Eigenschaften auf:
Die gebrannten, geformten Erzeugnisse weisen eine sehr gute Kaltdruckfestigkeit gemäß DIN EN 993-5:2019-03, vorzugsweise von 135 bis 350 MPa, insbesondere 140 bis 250 MPa, auf.

Die Kaltbiegefestigkeit nach DIN EN 993-6:2019-03 der erfindungsgemäßen gebrannten, geformten Erzeugnisse, liegt vorzugsweise bei 30 bis 50 MPa, insbesondere bei 33 bis 43 MPa.

Außerdem weisen die gebrannten, geformten Erzeugnisse vorzugsweise einen Druckerweichungspunkt T_{0,5} gemäß DIN EN ISO 1893: 2008-09 von 1600 bis 1800 °C, bevorzugt 1650 bis 1750 °C, auf.

Die gebrannten, geformten Erzeugnisse weisen zudem vorzugsweise eine offene Porosität von 10 bis 17 Vol.-%, bevorzugt 11 bis 15 Vol.-%, bestimmt gemäß DIN EN 993-1:2019-03 auf.

Und/oder sie weisen vorzugsweise eine Rohdichte von 2,52 bis 2,72 g/cm³, insbesondere von 2,60 bis 2,66 g/cm³, bestimmt gemäß DIN 993-1:2019-03 auf.

Die gebrannten, geformten Erzeugnisse weisen zudem vorzugsweise eine Abriebfestigkeit von 1,0 bis 5 cm³, insbesondere von 2,5 bis 3,5 cm³, bestimmt gemäß DIN EN ISO 16282:2008-08 auf.

Alle vorgenannten Eigenschaften der erfindungsgemäßen Erzeugnisse sind jeweils einzeln und in jeglicher Kombination erfindungsgemäß.

Beispielsweise sind die angegebene Rohdichte und/oder Porosität in Kombination mit der Kaltbiegefestigkeit erfindungsgemäß.

Zudem sind die jeweils angegebenen Ober- und Untergrenzen der einzelnen Bereichsangaben erfindungsgemäß alle miteinander kombinierbar.

Anhand des nachfolgenden Beispiels wird die Erfindung verdeutlicht:
Aus nachfolgendem Versatz wurde durch Mischen eine Versatzfrischmasse hergestellt.

**Tabelle 1: Versatzzusammensetzung (trockene Versatzbestandteile)**

| Rohstoffbezeichnung | Eigenschaften | Körnung | Gewichtteile in M.-% |
|---|---|---|---|
| SiC 98 | | 2-3 mm | 12,5 |
| SiC 98 | | 1-2 mm | 16,5 |
| SiC 98 | | 0,5-1 mm | 17,2 |
| SiC 98 | | 0,2-0,5 mm | 15,8 |
| SiC 98 | | 0-0,2 mm | 12,1 |
| SiC 98 | | 0-0,06 mm | 4,6 |
| Si Metall | Fe-Gehalt <= 0,6 % | 200 mesh | 14 |
| SiO₂-Pulver | SiO₂ > 99 M.-% | 100 µm | 1,0 |
| Ton | SiO₂ > 58 M.-% | 63 µm | 4,2 |
| Mg-Ligninsulfonat | MgO > 8 M.-% | 200 µm | 1,8 |
| Mg-Stearat | MgO > 0,15 M.-% | 325 mesh | 0,3 |

Die Versatzbestandteile wurden zuerst 3 Minuten trocken, dann zwei Minuten mit Wasser und anschließend mit Öl und flüssigem Presshilfsmittel in Summe für 15 Min. in einem Schrägtellermischer gemischt. Die Feuchte wurde auf 3,3 M.-% eingestellt. Die Formgebung erfolgt auf Rüttelpressen, wobei die Form manuell mit SiC Masse gefüllt und für die Erreichung der Grünrohdichtenverteilung gestampft wurde. Der grüne Formkörper wurde für 95 h getrocknet und für 20 h bei einer maximalen Temperatur von 1450 °C unter Stickstoffatmosphäre gebrannt und danach analysiert. Die gesamte Nitridierungszeit betrug 75 h. Nachstehende Tabelle zeigt die Messergebnisse an den hergestellten Erzeugnissen:

**Tabelle 2: Messergebnisse**

| | **Einheit** | **Wert** |
|---|---|---|
| Rohdichte | g/cm³ | 2,62 |
| Offene Porosität | Vol.-% | 12,5 |
| KDF | N/mm² | 233 |
| KBF | N/mm² | 42 |
| Oxidationsbeständigkeit | Vol.-% | 0,56 |
| Abriebfestigkeit | cm³ | 3,2 |
| α Si₃N₄ | M.-% | 2,5 |
| β Si₃N₄ | M.-% | 5,5 |
| Si₂NO₂ | M.-% | 12,5 |
| SiC | M.-% | 76,2 |
| Al₂O₃ | M.-% | 1,1 |
| SiO₂ | M.-% | 1,3 |
| MgO | M.-% | 0,04 |

Wie bereits erläutert, handelt es sich bei den erfindungsgemäßen geformten Erzeugnissen vorzugsweise um Rohrschutzplatten für Müllverbrennungsanlagen, vorzugsweise für Hausmüllverbrennungsanlagen.

Gemäß einem weiteren Aspekt der Erfindung handelt es sich um Düsen oder Glocken, die insbesondere durch Gießen hergestellt sind. Die Düsen oder Glocken kommen insbesondere in Rauchgasentschwefelungsanlagen oder Schmelzwannen zur Abdeckung von Grafitelektroden zum Einsatz.

## Patentansprüche

1. Trockener Versatz zur Herstellung eines grobkeramischen, feuerfesten, geformten, gebrannten Erzeugnisses aus nitridgebundenem SiC, insbesondere einer Rohrschutzplatte für Müllverbrennungsanlagen oder einer Düse für Rauchgasentschwefelungsanlage oder einer Glocke für Schmelzwannen, aufweisend
a) eine SiC-Körnung, vorzugsweise in einer Menge von 73,0 bis 82,0 M.-%, bevorzugt von 76,0 bis 80,0 M.-%,
b) Si-Pulver, bevorzugt aus metallurgischem Silicium, in einer Menge von 10,0 bis 15,0 M.-%, bevorzugt von 12 bis 14,5 M.-%
c) SiO₂-Pulver, bevorzugt Quarzmehl, in einer Menge von 0,5 bis 5,0 M.-%, bevorzugt von 0,8 bis 2,5 M.-%,
d) zumindest eine mehlförmige Mg-Komponente aus einem Mg-haltigen Rohstoff,
**dadurch gekennzeichnet, dass**
der Versatz einen MgO-Gehalt von 0,1 bis 1,0 M.-%, bevorzugt von 0,15 bis 0,8 M.-%, besonders bevorzugt von 0,2 bis 0,4 M.-%, aufweist, und dass der Versatz borfrei ist.

2. Versatz nach Anspruch 1,
**dadurch gekennzeichnet, dass**
der Versatz zusätzlich zu den Versatzkomponenten a) bis c) zumindest eine mehlförmige Al-Komponente aus einem Al-haltigen Rohstoff aufweist.

3. Versatz nach Anspruch 1 oder 2,
**dadurch gekennzeichnet, dass**
der Versatz Mg-Ligninsulfonat (Magnesium-Ligninsulfonat) und/oder Mg-Stearat (Magnesiumstearat) als Mg-Komponente aufweist,
wobei der Versatz vorzugsweise Mg-Ligninsulfonat in einer Menge von 1,5 bis 2,5 M.-%, bevorzugt 1,6 bis 1,8 M.-% und/oder Mg-Stearat in einer Menge von 0,1 bis 0,5 M.- %, bevorzugt 0,2 bis 0,3 M.-%, aufweist.

4. Versatz nach einem der vorhergehenden Ansprüche,
**dadurch gekennzeichnet, dass**
der Versatz
a) zu mindestens 90 M.-%, bevorzugt zu mindestens 95 M.-%, bevorzugt zu mindestens 98 M.-%, aus den Bestandteilen a) bis d) und gegebenenfalls bzw. falls vorhanden der Al-Komponente besteht, und/oder
b) einen CaO-Gehalt von ≤ 0,05 M.-%, vorzugsweise ≤ 0,04 M.-%, bevorzugt ≤ 0,03 M.-%, aufweist.

5. Versatz nach einem der vorhergehenden Ansprüche,
**dadurch gekennzeichnet, dass**
die SiC-Körnung
a) einen Feinkornanteil mit einer Korngröße ≤ 1 mm gemäß DIN 66165-2:2016-08 und einen Grobkornanteil mit einer Korngröße > 1 mm gemäß DIN 66165-2:2016-08 aufweist, wobei der Grobkornanteil vorzugsweise 25 bis 33 M.-%, bevorzugt 27 bis 31 M.-%, bezogen auf die SiC-Körnung, beträgt,
und/oder
b) eine maximale Korngröße ≤ 3,5 mm, bevorzugt ≤ 3,0 mm, gemäß DIN 66165-2:2016-08 aufweist.

6. Versatzfrischmasse zur Herstellung eines grobkeramischen, feuerfesten, geformten, gebrannten Erzeugnisses aus nitridgebundenem SiC, insbesondere einer Rohrschutzplatte für Müllverbrennungsanlagen oder einer Düse für Rauchgasentschwefelungsanlage oder einer Glocke für Schmelzwannen, aufweisend:
a) eine SiC-Körnung, vorzugsweise in einer Menge von 73,0 bis 82,0 M.-%, bevorzugt von 76,0 bis 80,0 M.-%, bezogen auf die gesamte Trockenmasse der Versatzfrischmasse,
b) Si-Pulver, bevorzugt aus metallurgischem Silicium, in einer Menge von 10,0 bis 15,0 M.-%, bevorzugt von 12 bis 14,5 M.-%, bezogen auf die gesamte Trockenmasse der Versatzfrischmasse,
c) SiO₂-Pulver, bevorzugt Quarzmehl, in einer Menge von 0,5 bis 5,0 M.-%, bevorzugt von 0,8 bis 2,5 M.-%, bezogen auf die gesamte Trockenmasse der Versatzfrischmasse,
d) zumindest eine mehlförmige Mg-Komponente aus einem Mg-haltigen Rohstoff,
e) gegebenenfalls eine mehlförmige Al-Komponente aus zumindest einem Al-haltigen Rohstoff,
**dadurch gekennzeichnet, dass**
die Versatzfrischmasse einen MgO-Gehalt von 0,1 bis 1,0 M.-%, bevorzugt von 0,15 bis 0,8 M.-%, besonders bevorzugt von 0,2 bis 0,4 M.-%, bezogen auf die gesamte Trockenmasse der Versatzfrischmasse, aufweist, und dass die Versatzfrischmasse borfrei ist.

7. Versatzfrischmasse nach Anspruch 6,
**dadurch gekennzeichnet, dass**
die Versatzfrischmasse als Mg-Komponente Mg-Ligninsulfonat und/oder Mg-Stearat aufweist,
wobei die Versatzfrischmasse vorzugsweise Mg-Ligninsulfonat in einer Menge von 1,5 bis 2,5 M.-%, bevorzugt 1,6 bis 1,8 M.%, bezogen auf die gesamte Trockenmasse der Versatzfrischmasse und/oder Mg-Stearat in einer Menge von 0,1 bis 0,5 M.-%, bevorzugt 0,2 bis 0,3 M.%, bezogen auf die gesamte Trockenmasse der Versatzfrischmasse aufweist.

8. Versatzfrischmasse nach Anspruch 6 oder 7,
**dadurch gekennzeichnet, dass**
die Versatzfrischmasse
a) einen CaO-Gehalt von ≤ 0,05 M.-%, vorzugsweise ≤ 0,04 M.-%, bevorzugt ≤ 0,03 M.-%,
und/oder
b) einen trockenen Versatz nach einem der Ansprüche 1 bis 5,
aufweist.

9. Verwendung eines Versatzes gemäß einem der Ansprüche 1 bis 5 oder einer Versatzfrischmasse nach einem der Ansprüche 6 bis 8 zur Herstellung eines grobkeramischen, feuerfesten, geformten, gebrannten Erzeugnisses aus nitridgebundenem SiC, insbesondere zur Herstellung einer Rohrschutzplatte für Müllverbrennungsanlagen oder einer Düse für Rauchgasentschwefelungsanlagen oder einer Glocke für Schmelzwannen.

10. Grobkeramisches, feuerfestes, geformtes, gebranntes Erzeugnis aus nitridgebundenem SiC, vorzugsweise Rohrschutzplatte für Müllverbrennungsanlagen oder Düse für Rauchgasentschwefelungsanlage oder Glocke für Schmelzwannen, vorzugsweise hergestellt aus einem Versatz gemäß einem der Ansprüche 1 bis 5 oder einer Versatzfrischmasse gemäß einem der Ansprüche 6 bis 8, wobei das Erzeugnis Siliciumcarbidkörner aufweist, die in eine Bindematrix eingebunden sind, die als Bindephase zumindest Si₃N₄ und Si₂ON₂ aufweist,
**dadurch gekennzeichnet, dass**
das Erzeugnis einen Si₂ON₂-Gehalt von 8,0 bis 18,0 M.-%, bevorzugt 10 bis 16,0 M.-%, bestimmt mittels Röntgenbeugungsanalyse gemäß DIN EN 12698-2:2007-06,
einen MgO-Gehalt von 0,005 bis 0,1 M.-%, bevorzugt von 0,01 bis 0,08 M.-%, besonders bevorzugt von 0,02 bis 0,07 M.-%, bestimmt mittels Röntgenfluoreszenzanalyse gemäß DIN EN ISO 12677:2013-02 mit Schmelzaufschlussverfahren, und
einen Si₃N₄-Gehalt von 6,5 bis 12,0 M.-%, bevorzugt 7,0 bis 10,0 M.-%, bestimmt mittels Röntgenbeugungsanalyse gemäß DIN EN 12698-2:2007-06
aufweist,
wobei der Si₃N₄-Gehalt des Erzeugnisses kleiner als der Si₂ON₂-Gehalt ist,
und
dass das Erzeugnis borfrei ist.

11. Erzeugnis nach Anspruch 10,
**dadurch gekennzeichnet, dass**
das Erzeugnis
a) einen Oxidationswert gemäß ASTM C-863-00(2016) bei einer Beaufschlagung mit 1000°C für 500 h von 0,0 bis 1,4 Vol.-%, bevorzugt 0,0 bis 1,0 Vol.-%,
und/oder
b) einen SiO₂-Gehalt von 0,5 bis 3,0 M.-%, bevorzugt 0,8 bis 2,0 M.-%, bestimmt gemäß DIN EN ISO 12677:2013-02 mit Schmelzaufschlussverfahren,
aufweist.

12. Erzeugnis nach Anspruch 10 oder 11,
**dadurch gekennzeichnet, dass**
das Erzeugnis
a) einen SiC-Gehalt von 69,0 bis 82,0 M.-%, bevorzugt 72,0 bis 78,0 M.-%, bestimmt gemäß DIN EN ISO 21068-1:2008-12 und DIN EN ISO 21068-2:2008-12,
und/oder
b) einen CaO-Gehalt von < 0,1 M.-%, vorzugsweise < 0,07 M.-%, bevorzugt < 0,05 M.-%, bestimmt mittels Röntgenfluoreszenzanalyse gemäß DIN EN ISO 12677:2013-02 mit Schmelzaufschlussverfahren,
aufweist.

13. Erzeugnis nach einem der Ansprüche 10 bis 12,
**dadurch gekennzeichnet, dass**
das Erzeugnis
a) eine Kaltdruckfestigkeit gemäß DIN EN 993-5:1998-12 von 135 bis 350 MPa, insbesondere 140 bis 250 MPa,
und/oder
b) eine Kaltbiegefestigkeit nach DIN EN 993-6:1995-04 von 30 bis 50 MPa, insbesondere 33 bis 43 MPa,
und/oder
c) einen Druckerweichungspunkt T_{0,5} gemäß DIN EN ISO 1893: 2008-09 von 1600 bis 1800 °C, bevorzugt 1650 bis 1750 °C,
und/oder
d) eine offene Porosität von 10 bis 17 Vol.-%, bevorzugt 11 bis 15 Vol.- %, bestimmt gemäß DIN EN 993-1:1995-04,
und/oder
e) eine Rohdichte von 2,52 bis 2,72 g/cm³, insbesondere von 2,60 bis 2,66 g/cm³, bestimmt gemäß DIN 993-1:1995-04,
aufweist.

14. Erzeugnis nach einem der Ansprüche 10 bis 13,
**dadurch gekennzeichnet, dass**
das Erzeugnis Siliciumcarbidkörner mit einer Korngröße ≤ 1 mm und Siliciumcarbidkörner mit einer Korngröße > 1 mm aufweist, wobei vorzugsweise der Anteil an Siliciumcarbidkörnern mit einer Korngröße > 1 mm 25 bis 33 M.-%, bevorzugt 27 bis 31 M.-%, bezogen auf die Gesamtmasse an Siliciumcarbidkörnern beträgt.

15. Verfahren zur Herstellung eines feuerfesten geformten, gebrannten Erzeugnisses, nach einem der Ansprüche 10 bis 14, insbesondere einer Rohrschutzplatte, aus einer Versatzfrischmasse gemäß einem der Ansprüche 6 bis 8,
**gekennzeichnet durch**
folgende Verfahrensschritte:
a) Herstellen der Versatzfrischmasse,
b) Formen, insbesondere Pressen, der Versatzfrischmasse zu einem grünen Formkörper,
c) Vorzugsweise Trocknen des grünen Formkörpers,
d) Brennen des grünen Formkörpers unter Ausbildung der Nitridphasen.

16. Verfahren nach Anspruch 15,
**dadurch gekennzeichnet, dass**
a) auf eine Restfeuchte zwischen 0,1 und 0,8 M.-%, insbesondere zwischen 0,1 und 0,4 M.-%, bestimmt gemäß DIN 51078:2002-12, getrocknet wird,
und/oder
b) in Stickstoffofenatmosphäre bei einer maximalen Temperatur von 1400 bis 1500 °C für vorzugsweise 17 bis 22 h gebrannt wird.

17. Müllverbrennungsanlage, vorzugsweise Hausmüllverbrennungsanlage, aufweisend Erhitzerrohre und eine Verkleidung dafür,
**dadurch gekennzeichnet, dass**
die Verkleidung zumindest eine Rohrschutzplatte gemäß einem der Ansprüche 10 bis 14 und/oder hergestellt nach Anspruch 15 oder 16.

18. Rauchgasentschwefelungsanlage,
**dadurch gekennzeichnet, dass**
die Rauchgasentschwefelungsanlage mindestens eine Düse gemäß einem der Ansprüche 10 bis 14 und/oder hergestellt nach Anspruch 15 oder 16 aufweist.

19. Schmelzwanne,
**dadurch gekennzeichnet, dass**
die Schmelzwanne zur Abdeckung von Grafitelektroden mindestens eine Glocke gemäß einem der Ansprüche 10 bis 14 und/oder hergestellt nach Anspruch 15 oder 16 aufweist.

## Claims

1. Dry batch for the production of a coarse ceramic, refractory, shaped, fired product of nitride-bonded SiC, in particular a pipe protection plate for waste incineration plants or a nozzle for flue gas desulfurization plants or a bell for melting tanks, comprising
a) an SiC granulation, preferably in an amount of 73.0 to 82.0 ma.-ma.- %, preferably of 76.0 to 80.0 ma.-%,
b) Si powder, preferably of metallurgical silicon, in an amount of 10.0 to 15.0 ma.-%, preferably of 12 to 14.5 ma.-%
c) SiO₂ powder, preferably quartz flour, in an amount of 0.5 to 5.0 ma.-
%, preferably of 0.8 to 2.5 ma.-%,
d) at least one mealy Mg component made from an Mg-containing raw material,
**characterized in that**
the batch comprises an MgO content of 0.1 to 1.0 ma.-%, preferably of 0.15 to 0.8 ma.-%, particularly preferably of 0.2 to 0.4 ma.-%, and that the batch is boron-free.

2. Batch according to claim 1,
**characterized in that**
the batch comprises, in addition to the batch components a) to c), at least one mealy Al component made from an Al-containing raw material.

3. Batch according to claim 1 or 2,
**characterized in that**
the batch comprises Mg lignosulfonate (magnesium lignosulfonate) and/or Mg stearate (magnesium stearate) as Mg component,
wherein the batch preferably comprises Mg lignosulfonate in an amount of 1.5 to 2.5 ma.-%, preferably 1.6 to 1.8 ma.-% and/or Mg stearate in an amount of 0.1 to 0.5 ma.-%, preferably 0.2 to 0.3 ma.-%.

4. Batch according to one of the preceding claims,
**characterized in that**
the batch
a) consists of at least 90 ma.-%, preferably of at least 95 ma.-%, preferably of at least 98 ma.-%, of the constituents a) to d) and optionally or if present, the Al component,
and/or
b) comprises a CaO content of ≤ 0.05 ma.-%, preferably ≤ 0.04 ma.-%, in particular ≤ 0.03 ma.-%.

5. Batch according to one of the preceding claims,
**characterized in that**
the SiC granulation
a) comprises a fine grain portion with a grain size ≤ 1 mm according to DIN 66165-2:2016-08 and a coarse grain portion with a grain size > 1 mm according to DIN 66165-2:2016-08, the coarse grain portion preferably amounting to 25 to 33 ma.-%, preferably 27 to 31 ma.-%, based on the SiC granulation,
and/or
b) comprises a maximum grain size ≤ 3.5 mm, preferably ≤ 3.0 mm, according to DIN 66165-2:2016-08.

6. Fresh batch mass for the production of a coarse ceramic, refractory, shaped, fired product made of nitride-bonded SiC, in particular a pipe protection plate for waste incineration plants or a nozzle for flue gas desulfurization plants or a bell for melting tanks, comprising:
a) an SiC granulation, preferably in an amount of 73.0 to 82.0 ma.-%, preferably of 76.0 to 80.0 ma.-%, based on the total dry mass of the batch fresh mass,
b) Si powder, preferably of metallurgical silicon, in an amount of 10.0 to 15.0 ma.-%, preferably of 12 to 14.5 ma.-%, based on the total dry mass of the fresh batch mass,
c) SiO₂ powder, preferably quartz flour, in an amount of 0.5 to 5.0 ma.- %, preferably of 0.8 to 2.5 ma.-%, based on the total dry mass of the fresh batch mass,
d) at least one mealy Mg component from an Mg-containing raw material,
e) optionally a mealy Al component from at least one Al-containing raw material,
**characterized in that**
the fresh batch mass has an MgO content of 0.1 to 1.0 ma.-%, preferably of 0.15 to 0.8 ma.-%, particularly preferably of 0.2 to 0.4 ma.-%, based on the total dry mass of the fresh batch mass, and **in that** the fresh batch mass is boron-free.

7. Fresh batch mass according to claim 6,
**characterized in that**
the fresh batch mass comprises Mg lignosulfonate and/or Mg stearate as Mg component,
wherein the fresh batch mass preferably comprises Mg lignosulfonate in an amount of 1.5 to 2.5 ma.-%, preferably 1.6 to 1.8 ma.-%, based on the total dry mass of the fresh batch mass and/or Mg stearate in an amount of 0.1 to 0.5 ma.-%, preferably 0.2 to 0.3 ma.-%, based on the total dry mass of the fresh batch mass.

8. Fresh batch mass according to claim 6 or 7,
**characterized in that**
the fresh batch mass comprises
a) a CaO content of ≤ 0.05 ma.-%, preferably ≤ 0.04 ma.-%, in particular ≤ 0.03 ma.-%,
and/or
b) a dry batch according to one of claims 1 to 5.

9. Use of an batch according to one of claims 1 to 5 or a batch fresh mass according to one of claims 6 to 8 for the production of a coarse ceramic, refractory, shaped, fired product made of nitride-bonded SiC, in particular for the production of a pipe protection plate for waste incineration plants or a nozzle for flue gas desulfurization plants or a bell for melting tanks.

10. Coarse ceramic, refractory, shaped, fired product made of nitride-bonded SiC, preferably pipe protection plate for waste incineration plants or nozzle for flue gas desulfurization plants or bell for melting tanks, preferably produced from a batch according to one of claims 1 to 5 or a fresh batch mass according to one of claims 6 to 8, wherein the product comprises silicon carbide grains bonded in a binder matrix comprising at least Si₃N₄ and Si₂ON₂ as binder phase,
**characterized in that**
the product comprises
an Si₂ON₂ content of 8.0 to 18.0 ma.-%, preferably 10 to 16.0 ma.-%, determined by means of X-ray diffraction analysis in accordance with DIN EN 12698-2:2007-06,
an MgO content of 0.005 to 0.1 ma.-%, preferably of 0.01 to 0.08 ma.-%, particularly preferably of 0.02 to 0.07 ma.-%, determined by X-ray fluorescence analysis in accordance with DIN EN ISO 12677:2013-02 using the fusion digestion method, and
an Si₃N₄ content of 6.5 to 12.0 ma.-%, preferably 7.0 to 10.0 ma.-%, determined by X-ray diffraction analysis according to DIN EN 12698-2:2007-06,
wherein the Si₃N₄ content of the product is smaller than the Si₂ON₂ content,
and
that the product is boron-free.

11. Product according to claim 10,
**characterized in that**
the product comprises
a) an oxidation value according to ASTM C-863-00(2016) when exposed to 1000°C for 500 h of 0.0 to 1.4 vol.-%, preferably 0.0 to 1.0 vol.-%,
and/or
b) an SiO₂ content of 0.5 to 3.0 ma.-%, preferably 0.8 to 2.0 ma.-%, determined in accordance with DIN EN ISO 12677:2013-02 using the fusion digestion method.

12. Product according to claim 10 or 11,
**characterized in that**
the product comprises
a) an SiC content of 69.0 to 82.0 ma.-%, preferably 72.0 to 78.0 ma.-%, determined in accordance with DIN EN ISO 21068-1:2008-12 and DIN EN ISO 21068-2:2008-12,
and/or
b) a CaO content of < 0.1 ma.-%, preferably < 0.07 ma.-%, in particular < 0.05 ma.-%, determined by means of X-ray fluorescence analysis in accordance with DIN EN ISO 12677:2013-02 using the fusion digestion method.

13. Product according to one of claims 10 to 12,
**characterized in that**
the product comprises
a) a cold compressive strength according to DIN EN 993-5:1998-12 of 135 to 350 MPa, in particular 140 to 250 MPa,
and/or
b) a cold bending strength according to DIN EN 993-6:1995-04 of 30 to 50 MPa, in particular 33 to 43 MPa,
and/or
c) a compression softening point T_{0.5} according to DIN EN ISO 1893: 2008-09 of 1600 to 1800 °C, preferably 1650 to 1750 °C,
and/or
d) an open porosity of 10 to 17 vol.-%, preferably 11 to 15 vol.-%, determined according to DIN EN 993-1:1995-04,
and/or
e) a bulk density of 2.52 to 2.72 g/cm³, in particular 2.60 to 2.66 g/cm³, determined according to DIN 993-1:1995-04.

14. Product according to one of claims 10 to 13,
**characterized in that**
the product has silicon carbide grains with a grain size ≤ 1 mm and silicon carbide grains with a grain size > 1 mm, wherein preferably the proportion of silicon carbide grains with a grain size > 1 mm being 25 to 33 ma.-%, preferably 27 to 31 ma.-%, relative to the total mass of silicon carbide grains.

15. Process for the production of a refractory shaped, fired product, according to one of claims 10 to 14, in particular of a pipe protection plate, from a batch fresh mass according to one of claims 6 to 8,
**characterized by**
the following process steps:
a) producing the fresh batch mass,
b) shaping, in particular pressing, the fresh batch mass into a green molded body,
c) preferably drying the green molded body,
d) firing the green molded body with formation of the nitride phases.

16. Process according to claim 15,
**characterized by**
a) drying to a residual moisture content of between 0.1 and 0.8 ma.-%, in particular between 0.1 and 0.4 ma.-%, determined in accordance with DIN 51078:2002-12,
and/or
b) firing in a nitrogen furnace atmosphere at a maximum temperature of 1400 to 1500 °C for preferably 17 to 22 h.

17. Waste incineration plant, preferably domestic waste incineration plant, comprising heater tubes and a lining therefor,
**characterized in that**
the lining comprises at least one pipe protection plate according to one of claims 10 to 14 and/or produced according to claim 15 or 16.

18. Flue gas desulfurization plant,
**characterized in that**
the flue gas desulfurization plant comprises at least one nozzle according to one of claims 10 to 14 and/or produced according to claim 15 or 16.

19. Melting tank,
**characterized in that**
the melting tank comprises at least one bell for covering graphite electrodes according to one of claims 10 to 14 and/or produced according to claim 15 or 16.

## Revendications

1. Formulation sèche pour la fabrication d'un produit en céramique grossière, résistant au feu, moulé, cuit, en SiC lié par un nitrure, en particulier d'une plaque de protection de tuyaux pour des installations d'incinération de déchets ou d'une tuyère pour des installations de désulfuration des gaz de combustion ou d'une cloche pour des cuves de fusion, comprenant
a) des grains de SiC, de préférence en une quantité allant de 73,0 à 82,0 % en masse, de préférence allant de 76,0 à 80,0 % en masse,
b) une poudre de Si, de préférence de silicium métallurgique, en une quantité allant de 10,0 à 15,0 % en masse, de préférence allant de 12 à 14,5 % en masse
c) une poudre de SiO₂, de préférence une poudre de quartz, en une quantité allant de 0,5 à 5,0 % en masse, de préférence allant de 0,8 à 2,5 % en masse,
d) au moins un composant Mg sous forme de poudre provenant d'une matière première contenant du Mg,
**caractérisée en ce que**
la formulation présente une teneur en MgO allant de 0,1 à 1,0 % en masse, de préférence allant de 0,15 à 0,8 % en masse, de manière particulièrement préférée allant de 0,2 à 0,4 % en masse, et **en ce que** la formulation est exempte de bore.

2. Formulation selon la revendication 1,
**caractérisée en ce que**
la formulation présente, en plus des composants de formulation a) à c), au moins un composant Al sous forme de poudre provenant d'une matière première contenant de l'AI.

3. Formulation selon la revendication 1 ou la revendication 2,
**caractérisée en ce que**
la formulation présente du lignosulfonate de Mg (sulfonate de lignine de magnésium) et/ou du stéarate de Mg (stéarate de magnésium) en tant que composant Mg,
la formulation comprenant de préférence du lignosulfonate de Mg en une quantité allant de 1,5 à 2,5 % en masse, de préférence allant de 1,6 à 1,8 % en masse et/ou du stéarate de Mg en une quantité allant de 0,1 à 0,5 % en masse, de préférence allant de 0,2 à 0,3 % en masse.

4. Formulation selon l'une quelconque des revendications précédentes,
**caractérisée en ce que**
la formulation a
a) au moins 90 % en masse, de préférence au moins 95 % en masse, de préférence au moins 98 % en masse, des composants a) à d) et, le cas échéant ou s'il est présent, du composant Al,
et/ou
b) une teneur en CaO ≤ 0,05 % en masse, de préférence ≤ 0,04 % en masse, de préférence ≤ 0,03 % en masse.

5. Formulation selon l'une quelconque des revendications précédentes,
**caractérisée en ce que**
les grains de SiC
a) présentent une proportion de grains fins ayant une granulométrie ≤ 1 mm selon la norme DIN 66165-2:2016-08 et une proportion de gros grains ayant une granulométrie > 1 mm selon la norme DIN 66165-2:2016-08, la proportion de gros grains étant de préférence comprise entre 25 et 33 % en masse, de préférence entre 27 et 31 % en masse, par rapport aux grains de SiC,
et/ou
b) présentent une granulométrie maximale ≤ 3,5 mm, de préférence ≤ 3,0 mm, selon la norme DIN 66165-2:2016-08.

6. Masse fraîche de formulation pour la fabrication d'un produit en céramique grossière, résistant au feu, moulé, cuit, en SiC lié par un nitrure, en particulier d'une plaque de protection de tuyaux pour des installations d'incinération de déchets ou d'une tuyère pour des installations de désulfuration des gaz de combustion ou d'une cloche pour des cuves de fusion, présentant :
a) des grains de SiC, de préférence en une quantité allant de 73,0 à 82,0 % en masse, de préférence allant de 76,0 à 80,0 % en masse, par rapport à la masse sèche totale de la masse fraîche de formulation,
b) une poudre de Si, de préférence de silicium métallurgique, en une quantité allant de 10,0 à 15,0 % en masse, de préférence allant de 12 à 14,5 % en masse, par rapport à la masse sèche totale de la masse fraîche de formulation,
c) une poudre de SiO₂, de préférence une poudre de quartz, en une quantité allant de 0,5 à 5,0 % en masse, de préférence allant de 0,8 à 2,5 % en masse, par rapport à la masse sèche totale de la masse fraîche de formulation,
d) au moins un composant Mg sous forme de poudre provenant d'une matière première contenant du Mg,
e) optionnellement un composant Al sous forme de poudre provenant d'au moins une matière première contenant de l'Al,
**caractérisée en ce que**
la masse fraîche de formulation présente une teneur en MgO allant de 0,1 à 1,0 % en masse, de préférence allant de 0,15 à 0,8 % en masse, de manière particulièrement préférée de 0,2 à 0,4 % en masse, par rapport à la masse sèche totale de la masse fraîche de formulation, et **en ce que** la masse fraîche de formulation est exempte de bore.

7. Masse fraîche de formulation selon la revendication 6,
**caractérisée en ce que**
la masse fraîche de formulation présente, en tant que composant Mg, du lignosulfonate de Mg et/ou du stéarate de Mg,
la masse fraîche de formulation comprenant de préférence du ligninosulfonate de Mg en une quantité allant de 1,5 à 2,5 % en masse, de préférence allant de 1,6 à 1,8 % en masse, par rapport à la masse sèche totale de la masse fraîche de formulation, et/ou comprenant du stéarate de Mg en une quantité allant de 0,1 à 0,5 % en masse, de préférence allant de 0,2 à 0,3 % en masse, par rapport à la masse sèche totale de la masse fraîche de formulation.

8. Composition fraîche de formulation selon la revendication 6 ou la revendication 7,
**caractérisée en ce que**
la masse fraîche de formulation a
a) une teneur en CaO ≤ 0,05 % en masse, de préférence ≤ 0,04 % en masse, de préférence ≤ 0,03 % en masse,
et/ou
b) une formulation sèche selon l'une des revendications 1 à 5.

9. Utilisation d'une formulation selon l'une quelconque des revendications 1 à 5 ou d'une masse fraîche selon l'une quelconque des revendications 6 à 8 pour la fabrication d'un produit céramique grossier, résistant au feu, moulé, cuit, en SiC lié par un nitrure, en particulier pour la fabrication d'une plaque de protection de tuyaux pour des installations d'incinération de déchets ou d'une tuyère pour des installations de désulfuration de gaz de combustion ou d'une cloche pour des cuves de fusion.

10. Produit en céramique grossière, résistant au feu, moulé, cuit, en SiC lié par un nitrure, de préférence une plaque de protection de tuyaux pour des installations d'incinération de déchets ou une tuyère pour des installations de désulfuration de gaz de combustion ou une cloche pour des cuves de fusion, de préférence fabriqué à partir d'une formulation selon l'une des revendications 1 à 5 ou d'une masse fraîche de formulation selon l'une des revendications 6 à 8, le produit présentant des grains de carbure de silicium qui sont incorporés dans une matrice de liaison qui présente comme phase de liaison au moins Si₃N₄ et Si₂ON₂,
**caractérisé en ce que**
le produit ayant
une teneur en Si₂ON₂ de 8,0 à 18,0 % en masse, de préférence allant de 10 à 16,0 % en masse, déterminée par analyse de diffraction des rayons X selon la norme DIN EN 2698-2:2007-06,
une teneur en MgO allant de 0,005 à 0,1 % en masse, de préférence allant de 0,01 à 0,08 % en masse, de manière particulièrement préférée, allant de 0,02 à 0,07 % en masse, déterminée par analyse par fluorescence X selon la norme DIN EN ISO 12677:2013-02 avec un procédé de minéralisation par fusion, et
une teneur en Si₃N₄ allant de 6,5 à 12,0 % en masse, de préférence allant de 7,0 à 10,0 % en masse, déterminée par analyse de diffraction des rayons X selon la norme DIN EN 12698-2:2007-06,
la teneur en Si₃N₄ du produit étant inférieure à la teneur en Si₂ON₂,
et
**en ce que** le produit est exempt de bore.

11. Produit selon la revendication 10,
**caractérisé en ce que**
le produit a
a) une valeur d'oxydation selon ASTM C-863-00(2016) à une exposition à 1000°C pendant 500 heures allant de 0,0 à 1,4 % en volume, de préférence allant de 0,0 à 1,0 % en volume,
et/ou
b) une teneur en SiO₂ allant de 0,5 à 3,0 % en masse, de préférence allant de 0,8 à 2,0 % en masse, déterminée selon la norme DIN EN ISO 12677:2013-02 au moyen d'un procédé de minéralisation par fusion.

12. Produit selon la revendication 10 ou la revendication 11,
**caractérisé en ce que**
le produit a
a) une teneur en SiC de 69,0 à 82,0 % en masse, de préférence allant de 72,0 à 78,0 % en masse, déterminée selon la norme DIN EN ISO 21068-1:2008-12 et la norme DIN EN ISO 21068-2:2008-12,
et/ou
b) une teneur en CaO < 0,1 % en masse, de préférence < 0,07 % en masse, de préférence < 0,05 % en masse, déterminée par analyse par fluorescence X selon la norme DIN EN ISO 12677:2013-02 au moyen d'un procédé de minéralisation par fusion.

13. Produit selon l'une des revendications 10 à 12,
**caractérisé en ce que**
le produit a
a) une résistance à la pression à froid selon la norme DIN EN 993-5:1998-12 allant de 135 à 350 MPa, en particulier allant de 140 à 250 MPa,
et/ou
b) une résistance à la flexion à froid selon la norme DIN EN 993-6:1995-04 allant de 30 à 50 MPa, en particulier de 33 à 43 MPa,
et/ou
c) un point de ramollissement à la compression T_{0,5} selon la norme DIN EN ISO 1893: 2008-09 allant de 1600 à 1800°C, de préférence allant de 1650 à 1750°C,
et/ou
d) une porosité ouverte de 10 à 17 % en volume, de préférence allant de 11 à 15 % en volume, déterminée selon la norme DIN EN 993-1: 1995-04,
et/ou
e) une masse volumique apparente allant de 2,52 à 2,72 g/cm³, en particulier allant de 2,60 à 2,66 g/cm³, déterminée selon la norme DIN 993-1 :1995-04.

14. Produit selon l'une des revendications 10 à 13,
**caractérisé en ce que**
le produit présente des grains de carbure de silicium d'une granulométrie ≤ 1 mm et des grains de carbure de silicium d'une granulométrie > 1 mm, la proportion de grains de carbure de silicium d'une granulométrie > 1 mm allant de préférence de 25 à 33 % en masse, de préférence allant de 27 à 31 % en masse, par rapport à la masse totale des grains de carbure de silicium.

15. Procédé de fabrication d'un produit résistant au feu moulé et cuit, selon l'une des revendications 10 à 14, en particulier d'une plaque de protection de tuyaux, à partir d'une masse fraîche de formulation selon l'une des revendications 6 à 8, **caractérisé par**
les étapes consistant de procédé suivantes :
a) fabrication de la masse fraîche de formulation,
b) moulage, en particulier pressage, de la masse fraîche de formulation en un corps moulé vert,
c) de préférence, séchage du corps moulé vert,
d) cuisson du corps moulé vert avec formation des phases nitrures.

16. Procédé selon la revendication 15,
**caractérisé en ce que**
a) on sèche jusqu'à une humidité résiduelle comprise entre 0,1 et 0,8 % en masse, en particulier comprise entre 0,1 et 0,4 % en masse, déterminée selon la norme DIN 51078:2002-12,
et/ou
b) on cuit dans une atmosphère de four à azote à une température maximale allant de 1400 à 1500°C pendant, de préférence, 17 à 22 heures.

17. Installation d'incinération de déchets, de préférence un incinérateur d'ordures ménagères, présentant des tubes de chauffage et un habillage pour ceux-ci,
**caractérisée en ce que**
l'habillage comprend au moins une plaque de protection des tubes selon l'une des revendications 10 à 14 et/ou est fabriqué selon la revendication 15 ou la revendication 16.

18. Installation de désulfuration de gaz de combustion,
**caractérisée en ce que**
l'installation de désulfuration de gaz de combustion comporte au moins une tuyère selon l'une quelconque des revendications 10 à 14 et/ou fabriquée selon la revendication 15 ou la revendication 16.

19. Cuve de fusion,
**caractérisé en ce que**
la cuve de fusion destinée à recouvrir des électrodes en graphite comprend au moins une cloche selon l'une des revendications 10 à 14 et/ou fabriquée selon la revendication 15 ou la revendication 16.
